# DEMANDE DE BREVET EUROPEEN

(11) **EP 0 905 364 A1**
(43) Date de publication de la demande: **31.03.1999**
(21) Numéro de dépôt: 98402343.2
(22) Date de dépôt: 24.09.1998
(51) Int. Cl.: F02K 1/60

(54) **Inverseur de poussée de turboréacteur à coquilles internes**

(30) Priorité: 25.09.1997 FR 9711926
(71) Demandeur: Hispano-Suiza Aérostructures, 76700 Gonfreville l'Orcher, Harfleur (FR)
(72) Inventeur: Metezeau, Fabrice Henri Emile, 76600 Le Havre (FR); Vauchel, Guy Bernard, 76610 Le Havre (FR)

(57) **Abrégé**

Un inverseur de poussée de turboréacteur comporte une partie mobile composée de deux coquilles internes (12) montées sur des pivots fixes (18) de la structure fixe (1) et d'une structure annulaire (11) déplaçable axialement constituant la partie externe (13) aval de la nacelle et en jet direct, la partie aval (15) de la paroi radialement externe du canal de veine du flux, en formant le bord de fuite et en recouvrant lesdites coquilles (12) qui constituent une partie de ladite paroi radialement externe de veine de flux.

## Description

La présente invention concerne un inverseur de poussée à coquilles internes destiné être installé sur des moteurs d'avions de type turboréacteur à double ou simple flux.

Habituellement, les inverseurs montés en aval du moteur ont la double fonction :
- de réaliser la tuyère d'éjection en mode jet direct
- de réaliser l'inversion en mode jet inversé

Ces inverseurs sont en fait des inverseurs dits "target" ou "à coquille" et sont équipés de deux coquilles montées pivotantes sur la structure fixe de l'inverseur.

Ces inverseurs de poussée ont l'avantage d'être relativement simples et légers. La cinématique est simple. Les coquilles réalisent la tuyère du moteur en jet direct et constituent les obstacles qui permettent d'inverser le flux en jet inversé.

On connaît pour ce type d'inverseur à obstacles aval des dispositions à pivot fixe comme dans les exemples représentés par les brevets FR 2.348.371 et US 3.550.855 et dont les pivots sont installés en aval des portes pour assurer un éloignement suffisant desdites portes par rapport à la sortie d'éjection du moteur en mode jet inversé.
US 2.847.823 montre un inverseur à obstacles aval comportant un anneau arrière fixe.

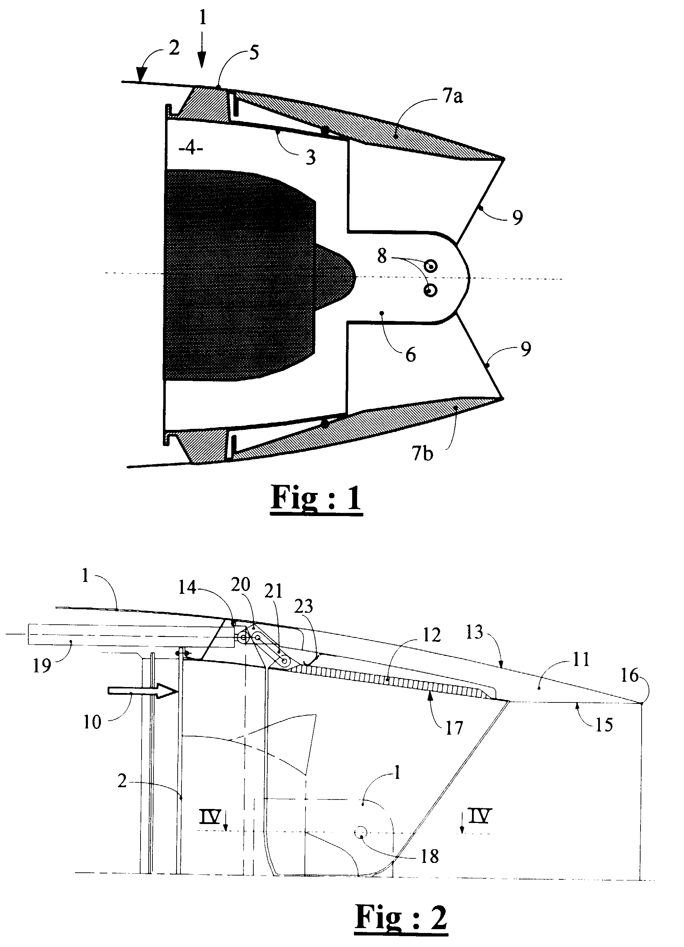

La figure 1 des dessins annexés montre un exemple de réalisation de ce type connu d'inverseur de poussée.

L'inverseur de poussée est constitué dans ce cas d'une structure fixe amont 1 fixée sur le turboréacteur 2 ou sa nacelle et comportant une paroi interne 3 délimitant extérieurement le canal annulaire 4 de circulation de la veine fluide, un carénage externe 5 fixé sur la paroi interne 3 et deux structures latérales 6. Deux obstacles aval ou coquilles 7a et 7b sont montés pivotants sur la structure fixe, notamment au moyen de pivots 8 portés par les structures latérales 6 qui supportent également un système de commande des déplacements et de verrouillage des obstacles 7a et 7b. L'extrémité aval 9 des obstacles 7a et 7b constituent le bord de fuite de la paroi externe, en prolongement vers l'aval du carénage 5, n'est pas coplanaire.

Il en résulte dans ce cas, lors du fonctionnement en poussée directe, lorsque les coquilles 7a et 7b sont intégrées à la paroi extérieure du canal dans le prolongement d'une partie fixe, des pertes aérodynamiques qui peuvent être importantes et porter un grave préjudice à l'obtention des performances recherchées du fait que les coquilles 7a et 7b doivent rester inclinées en jet inversé et que les fuites entre les deux coquilles doivent être minimisées afin de réaliser la contre-poussée requise.
Des solutions ont déjà été proposées pour tenter d'y remédier. Ainsi, FR-A-2.638.783 propose d'adjoindre à l'inverseur des volets latéraux mobiles, ce qui impose des articulations et présente l'inconvénient d'accroître la complexité préjudiciable à la fiabilité et d'augmenter la masse, à l'encontre de la réduction toujours recherchée pour des applications aéronautiques.

De même, FR-A-2.601.077 prévoit une structure fixe en aval des obstacles de l'inverseur. De ce fait, l'allongement du canal et les dispositions nécessaires pour permettre les déplacements des obstacles et l'obtention d'une ouverture suffisante en position d'inversion de poussée, en amont de ladite structure fixe entraînent également une augmentation de masse.

On connaît également des dispositifs d'inversion de poussée à coquilles internes pivotantes. US 4.790.495 illustre un exemple de réalisation qui présente l'inconvénient de laisser subsister un profil externe de nacelle arrière non lissé qui entraîne des pertes aérodynamiques et de nécessiter un système de commande et de verrouillage complexe. Une autre solution est décrite par US 4.340.178 qui prévoit un système de pivots des coquilles sur rails qui induit des problèmes de fiabilité et de complexité et entraîne un accroissement de masse.
Un des buts de l'invention est de supprimer les pertes aérodynamiques en jet direct dues à un bord de fuite non coplanaire, sans encourir les inconvénients d'accroissement de masse ou de complexification des solutions connues antérieures mais en obtenant, au contraire, un système et une cinématique simplifiés sans incidence défavorable sur la masse.

Un inverseur de poussée de turboréacteur à coquilles internes et structure aval annulaire mobile permettant de répondre à ces conditions est caractérisé en ce que la structure mobile constitue la partie externe aval de la nacelle et la partie aval de la paroi radialement externe délimitant la veine du flux de turboréacteur et forme la totalité du bord de fuite en jet direct en recouvrant lesdites coquilles internes constituant une partie de ladite paroi radialement externe de veine de flux, les pivots des coquilles étant fixes.

Avantageusement en mode de jet inversé aucune structure ne déborde des lignes externes de la nacelle. Avantageusement la composition de la structure mobile, indépendante de celle des coquilles internes déviant le flux chaud, peut être réalisée en matériau léger garantissant une masse optimale assurant une fiabilité et un coût de fabrication réduit.

D'autres caractéristiques et avantages de l'invention seront mieux compris à la lecture de la description qui va suivre d'un mode de réalisation de l'invention, en référence aux dessins annexés sur lesquels :
- la figure 1 précédemment décrite représente une vue schématique en coupe longitudinale par un plan passant par l'axe de rotation la partie arrière d'un turboréacteur équipé d'un inverseur de poussée à coquille formant obstacles aval de type connu ;
- la figure 2 représente selon une demi vue schématique analogue à celle de la figure 1 un inverseur de poussée selon un mode de réalisation conforme à l'invention ;
- la figure 3 représente le mode de réalisation représenté à la figure 2 dans une configuration d'inversion de poussée ;
- la figure 4 représente selon une vue schématique en section suivant la ligne IV-IV de la figure 2 un mode de réalisation des pivots des coquilles ;
- la figure 5 montre selon une demi-vue schématique analogue à celle de la figure 2 un mode de réalisation d'un système de guidage renforcé de la structure annulaire aval mobile ;
- les figures 6 et 7 représentent les sections respectivement suivant les lignes VI-VI et VII-VII de la figure 5 de la réalisation représentée sur la figure 5.

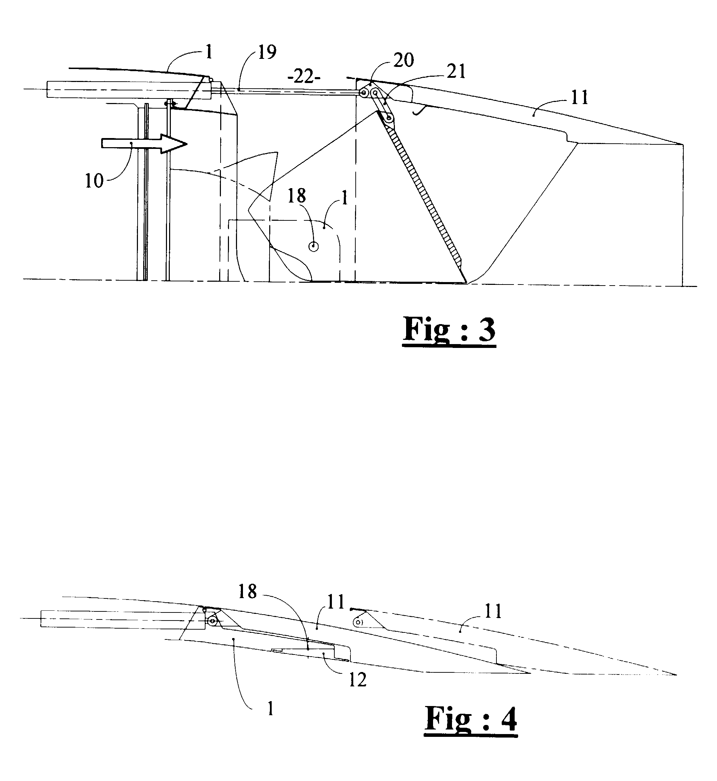

Les figures 2 et 3 représentent un inverseur de poussée de turboréacteur conforme à l'invention, respectivement lors d'un fonctionnement en jet direct et lors d'un fonctionnement en inversion de poussée.

Une structure fixe amont 1 de l'inverseur est fixée sur un carter 2 du turboréacteur . Dans l'exemple représenté sur les dessins où le turboréacteur est à double flux, le carter 2 constitue la paroi radialement externe délimitant la veine du flux secondaire symbolisé par la flèche 10. La structure fixe 1 constitue la partie externe de la nacelle de l'ensemble propulsif comportant ledit turboréacteur.

L'ensemble mobile de l'inverseur est composé, d'une part, d'une structure aval annulaire mobile 11 et d'autre part, de deux coquilles 12 formant un ensemble annulaire. La surface extérieure 13 de la structure aval annulaire mobile 11 constitue la partie externe aval de la nacelle, dans le prolongement de la structure fixe 1 d'inverseur avec interposition d'un joint 14 assurant l'étanchéité dans la configuration de jet direct représentée sur la figure 2. La surface intérieure 15 de la structure aval annulaire mobile 11 constitue la partie aval de la paroi radialement externe délimitant la veine du flux de turboréacteur. L'extrémité aval 16 de la structure aval annulaire mobile 11 forme la totalité du bord de fuite du canal d'éjection du turboréacteur qui est ainsi coplanaire et contenu dans un plan perpendiculaire à l'axe de rotation du turboréacteur. Les coquilles 12 dans la configuration de jet direct sont dans une position interne et sont recouvertes par la partie amont de la structure aval annulaire mobile 11. La surface interne 17 des coquilles 12 se raccorde à la surface intérieure 15 de la structure aval 11 et constitue également une partie e la paroi radialement externe délimitant la veine du flux de turboréacteur. Chaque coquille interne 12 est susceptible de pivoter autour de pivots 18 situés de part et d'autre de la structure fixe 1 de l'inverseur. La figure 4 montre un exemple de mise en place d'un pivot 18 sur la structure fixe 1.
La structure fixe amont 1 supporte des moyens de commande des déplacements de l'ensemble mobile de l'inverseur. Dans l'exemple de réalisation représenté sur les figures 2 et 3, ces moyens sont constitués par des vérins 19 dont la tige est articulée sur une chape 20 solidaire de la structure aval mobile 11. Dans cet exemple également, la coquille interne 12 est reliée à la structure aval mobile 11 par une bielle 21 qui dans ce cas est placée dans le plan axial de la coquille et est accrochée en amont sur la chape 20 de la structure aval mobile 11. D'autres dispositions équivalentes de montage peuvent être adoptées. Notamment, la bielle de liaison peut être accrochée sur la structure aval mobile en aval du point d'entraînement sur la coquille. La liaison peut également être assurée au moyen de deux bielles accouplées, réparties de part et d'autre du plan axial de la coquille. Des vérins synchronisés associés à des guides peuvent être utilisés. L'ensemble mobile de l'inverseur peut également être entraîné par un vérin associé à une ou au deux coquilles qui entraînent dans ce cas la structure aval mobile. Le ou les vérins d'entraînement peuvent être disposés à proximité des pivots de coquille.
Le fonctionnement de l'inverseur de poussée se déduit directement de la description ci-dessus, en référence aux figures 2 et 3. Le passage de la configuration de jet direct représentée sur la figure 2 à la configuration d'inversion de poussée représentée sur la figure 3 est obtenu en actionnant les vérins 19, dans l'exemple représenté. La structure annulaire aval 11 est déplacée axialement vers l'arrière dégageant ainsi un passage 22 à travers la nacelle pour le flux dévié entre la structure fixe amont 1 et le bord amont de la structure aval mobile 11. En même temps, les coquilles internes 12 pivotant autour de leurs pivots respectifs 18 viennent obstruer le canal de circulation des gaz en se joignant bord à bord sur l'axe longitudinal du turboréacteur, déviant ainsi le flux et le dirigeant vers ledit passage 22 en procurant une inversion de poussée.

Aux avantages précédemment notés de l'invention on ajoutera que la pression du flux sur les coquilles 12 n'a pas ou peu d'incidence sur leur équilibrage et leur tenue structurale. Les moyens de commande des déplacements de l'ensemble mobile de l'inverseur incluent en outre avantageusement des moyens de verrouillage dans la configuration de jet direct qui présentent toute sûreté de fonctionnement. La fiabilité et la simplicité des liaisons par bielle entre coquilles et structure aval mobile sont remarquables. On note également que la structure aval mobile 11 du fait de sa continuité circonférentielle présente une rigidité adéquate. En position de jet direct, les accidents aérodynamiques sont réduits au minimum et les fuites sont réduites car le joint d'étanchéité est circonférentiel et donc très simple à réaliser.

Certaines améliorations peuvent en outre être apportées à la réalisation conforme à l'invention précédemment décrite :
- un moyen d'assistance anti-vibratoire peut être adjoint aux coquilles 12 de manière à améliorer la qualité aérodynamique de l'écoulement du flux en jet direct et notamment être associé à la structure aval mobile 11, par exemple en disposant un système de ressort tel que 23 entre la coquille 12 et la structure aval mobile 11 ;
- des grilles à aubage de déviation peuvent en outre être adjointes dans certaines applications de l'inverseur de poussée de manière à améliorer les performances en jet inversé ;
- dans ce but également, comme il est connu sur les portes d'inverseur, la partie amont de la partie externe de la structure aval mobile 11 peut déborder de la partie amont des coquilles 12, jouant ainsi le rôle de becquet amont de déviation de flux ;
- en cas de difficulté d'installation des pivots et vérins dans l'espace situé entre les lignes externes de nacelle et les lignes externes du canal de circulation du flux, des carénages à profil aérodynamique adapté peuvent être adjoints.

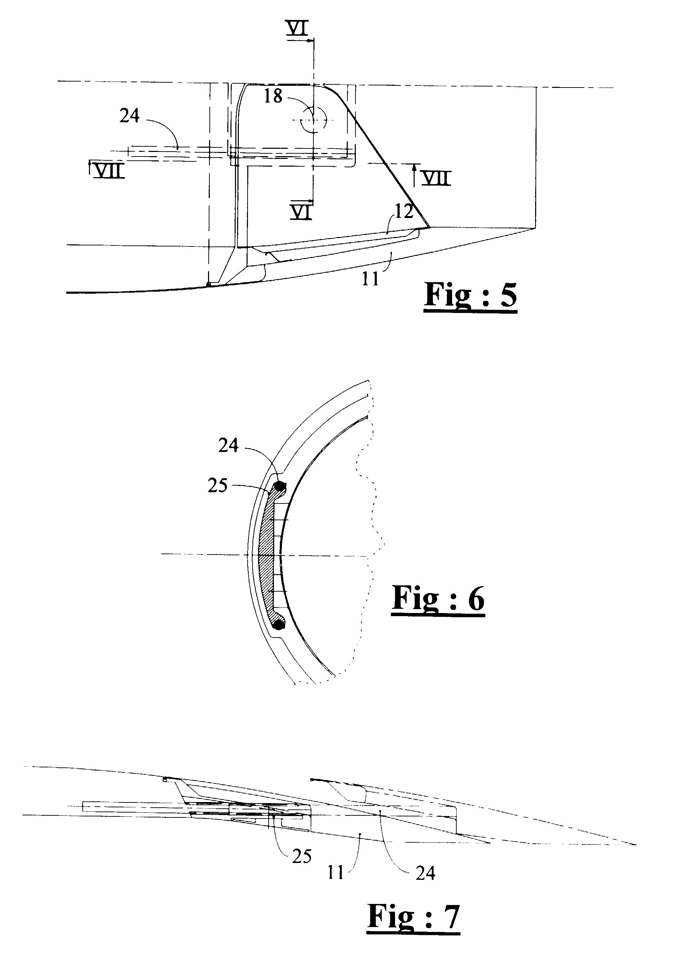

Les figures 5 à 7 montrent une variante de réalisation des moyens de déplacement de la structure aval mobile 11. Des coulisseaux 24 sont disposés de part et d'autre des poutres latérales et supportent des tiges de guidage 25 associées à la structure aval mobile 11 de manière à obtenir un guidage renforcé des déplacements de ladite structure mobile 11. Ce montage peut également être inversé ou un coulisseau unique peut être disposé dans l'axe des poutres.

## Revendications

1. Inverseur de poussée de turboréacteur comportant des éléments déplaçables formant deux coquilles (12) et constituant, en position déployée, des obstacles de déviation de flux en procurant une inversion de poussée, les coquilles (12) étant montées pivotantes au moyen de pivots (18) portés par des structures latérales appartenant à la structure fixe (1) de l'inverseur qui supporte également des moyens de commande (19) des déplacements et de verrouillage et comportant également une structure annulaire mobile (11) déplaçable axialement et située en aval de la structure fixe (1) d'inverseur qui est fixée sur un carter (2) du turboréacteur caractérisé en ce que ladite structure mobile (11) constitue la partie externe aval de la nacelle et la partie aval de la paroi radialement externe délimitant la veine du flux de turboréacteur et forme la totalité du bord de fuite en jet direct en recouvrant lesdites coquilles (12) qui sont internes et constituent une partie de ladite paroi radialement externe de veine de flux, lesdits pivots (18) des coquilles (12) étant fixes.

2. Inverseur de poussée de turboréacteur selon la revendication 1 caractérisé en ce que le déplacement de la structure aval mobile (11) est assuré par des vérins (19) synchronisés, chaque coquille interne (12) étant reliée par au moins une bielle (21) à ladite structure aval mobile (11).

3. Inverseur de poussée de turboréacteur selon l'une des revendications 1 ou 2 caractérisé en ce que un moyen d'assistance anti-vibratoire tel qu'un système de ressort (23) est disposé entre la coquille (12) et la structure aval mobile (11).

4. Inverseur de poussée de turboréacteur selon l'une quelconque des revendications 1 à 3 caractérisé en ce que des moyens de guidage à coulisseau (24) coopérant avec une tige de guidage (25) sont associés à la structure aval mobile (11).

5. Inverseur de poussée de turboréacteur selon la revendication 1 caractérisé en ce que au moins un vérin associé à au moins une coquille (12) assure le pivotement des coquilles (12) qui entraînent la structure aval mobile (11).
